# EUROPÄISCHE PATENTANMELDUNG

(11) **EP 3 091 732 A1**
(43) Veröffentlichungstag der Anmeldung: **09.11.2016**
(21) Anmeldenummer: 16164627.8
(22) Anmeldetag: 11.04.2016
(51) Int. Cl.: H04N 5/33, B60R 1/00

(54) **KAMERASYSTEM FÜR EIN KRAFTFAHRZEUG**

(30) Priorität: 04.05.2015 DE 102015005697
(71) Anmelder: MEKRA LANG GmbH & Co. KG, 91465 Ergersheim (DE)
(72) Erfinder: LANG, Dr., Werner, 91465 Ergersheim (DE); REDLINGSHÖFER, Andreas, 90619 Trautskirchen (DE); SNEL, Jaap-Jan, 91465 Ergersheim (DE)
(74) Vertreter: Kramer Barske Schmidtchen Patentanwälte PartG mbB

(57) **Zusammenfassung**

Ein Kamerasystem für ein Fahrzeug hat eine Bildaufnahmeeinheit 2 mit einem Bildsensor 4, einem optischen Element 3 und wenigstens einem IR-Sperrfilter 5 zur Erfassung von Bilddaten eines Objekts, eine Verarbeitungseinheit, die die von der Bildaufnahmeeinheit 2 erfassten Bilddaten verarbeitet zur Anzeige des Objekts 7 auf einer Anzeigeneinheit 9, und wenigstens eine Beleuchtungseinheit 10, die das Objekt 7 mit Licht 12 beleuchtet, das eine Wellenlänge zumindest teilweise im oberen Bereich 13 der Empfindlichkeit des menschlichen Auges und zumindest teilweise unterhalb einer Sperrgrenze des IR-Sperrfilters 5 aufweist.

## Beschreibung

Die Erfindung betrifft ein Kamerasystem für ein Fahrzeug und kann beispielsweise in einem Fahrerassistenzsystem bzw. Spiegelersatzsystem für Fahrzeuge, beispielsweise in Nutzfahrzeugen verwendet werden.

Allgemein bekannte Kamerasysteme für Fahrzeuge weisen Fahrbildsensoren auf zur realitätsnahen Darstellung einer Umgebung des Fahrzeugs in dem das Kamerasystem verwendet wird. Durch einfallendes Infrarotlicht (im Folgenden IR-Licht genannt) auf den Farbbildsensor kann es zu einer Verfälschung der Farbwiedergabe und somit zu einer realitätsfremden Darstellung der Umgebung kommen. Andererseits verbessert die Nutzung von IR-Licht die Bildhelligkeit bei dunklen Umgebungsbedingungen, beispielsweise bei Nacht oder bei einer Fahrt durch einen Tunnel.

Um einerseits die nachteiligen Auswirkungen von IR-Licht auf die Farbwiedergabe bei hellen Umgebungsbedingungen zu unterdrücken und andererseits die positive Auswirkungen von IR-Licht bei dunklen Umgebungsbedingungen auszunutzen, werden beispielsweise IR-Filter in Bildaufnahmeeinheiten verwendet. Dabei werden IR-Filter eingesetzt, die mechanisch in eine erste und zweite Position schwenkbar sind, um die Auswirkungen von IR-Licht bei Tage in der ersten Position zu unterdrücken und bei Nacht in der zweiten Position auszunutzen.

Derartige bewegbare IR-Filter sind jedoch für den Einsatz im Fahrzeugbereich schwierig umsetzbar, aufgrund mechanisch bewegter Teile in Kombination mit starken Vibrationen im Fahrbetrieb. Derartige schwenkbare IR-Filter sind somit mechanisch aufwendig und fehleranfällig.

Einerseits weisen herkömmliche Kamerasysteme Zusatzschweinwerfer auf, die sichtbares Licht ausstrahlen. Derartige Zusatzscheinwerfer können sich störend auf die Bildwiedergabe auswirken oder anbausituationsbedingt gesetzlich nicht zugelassen sein.

Andererseits verwenden herkömmliche Kamerasysteme zur Verbesserung der Bildwiedergabe bei Dunkelheit eine zusätzliche IR-Beleuchtung, was jedoch die oben genannten Nachteile einer farbverfälschten Darstellung bei Tage mit sich bringt.

Üblicherweise erfolgt eine IR-Beleuchtung bei Kamerasystemen in einem Bereich von ca. 850-950 nm, welcher für das menschliche Auge nicht wahrnehmbar ist, da die Empfindlichkeit des menschlichen Auges bei ca. 380 bis 780 nm liegt.

DE 10 2013 001 285 A1 betrifft einen Scheinwerfer für ein Kraftfahrzeug, der zusätzlich zu einem Abblendlichtbündel ein Hilfslichtbündel mit geringerer Lichtstärke und Licht aussendet, dessen Wellenlänge nicht im oberen Bereich der Empfindlichkeit des menschlichen Auges liegt.

DE 10 2008 031 593 A1 betrifft ein Kamerasystem mit einem Filtersystem, das mehrere weitgehend Infrarot-durchlässige Farbfilter aufweist, wobei das Kamerasystem ein Mittel zum Kompensieren des Infrarot-Anteils aufweist.

DE 10 2011 105 628 A1 betrifft ein System zur Unterstützung der Sicht eines Fahrers, wobei das System in der Lage ist, ein in der Dunkelheit erzeugtes Farbbild zu verwenden, das zum Erkennen eines Fußgängers erforderlich ist und ein Bild zur Darstellung einer Fahrbahn, das für eine Fahrbahnabweichungswarnung erforderlich ist, wobei ein einziges Kameramodul benutzt wird.

Aufgabe der Erfindung ist die Schaffung eines Kamerasystems für ein Fahrzeug, das bei Dunkelheit eine detaillierte Bildwiedergabe der Fahrzeugumgebung ermöglicht und bei Helligkeit eine minimale Beeinflussung der Farbtreue realisiert.

Die Lösung der obigen Aufgabe erfolgt durch ein Kamerasystem gemäß den Merkmalen des Anspruchs 1. Vorteilhafte Weiterentwicklungen der Erfindung sind in den Unteransprüchen angegeben.

Das Kamerasystem gemäß der Erfindung weist eine Bildaufnahmeeinheit mit einem Bildsensor, mindestens einem optischen Element und wenigstens einem IR-Sperrfilter auf, um Bilddaten von einem Objekt (Fahrzeugumgebung) zu erfassen. Dabei werden die von der Bildaufnahmeeinheit erfassten Bilddaten durch eine Verarbeitungseinheit weiterverarbeitet zur Anzeige des Objekts bzw. der Fahrzeugumgebung auf einer Anzeige, die von einem Fahrer des Fahrzeugs betrachtet werden kann.

Gemäß der Erfindung weist das Kamerasystem eine aktive Beleuchtungseinheit auf, die die Fahrzeugumgebung bzw. das Objekt, das auf der Anzeigeneinheit darzustellen ist, mit Licht beleuchtet, das eine Wellenlänge zumindest teilweise im oberen Bereich der Empfindlichkeit des menschlichen Auges und zumindest teilweise unterhalb der Sperrgrenze des verwendeten IR-Sperrfilters aufweist.

Durch Verwendung einer derartigen Beleuchtungseinheit ist es möglich, sowohl eine Farbverfälschung bei hellen Umgebungsbedingungen zu vermeiden als auch eine optimale detaillierte Bildwiedergabe bei dunklen Umgebungsbedingungen zu gewährleisten.

Gemäß einer Weiterentwicklung der Erfindung beleuchtet die Beleuchtungseinheit das Objekt mit Licht, das eine Wellenlänge vollständig im oberen Bereich der Empfindlichkeit des menschlichen Auges und vollständig unterhalb der Sperrgrenze des IR-Filters aufweist.

Gemäß einem anderen Ausführungsbeispiel beleuchtet die Beleuchtungseinheit das Objekt mindestens zu 50% mit Licht im oberen Bereich der Empfindlichkeit des menschlichen Auges.

Gemäß einer anderen Ausführungsform der Erfindung beleuchtet die Beleuchtungseinheit das Objekt mit Licht, das eine Wellenlänge im oberen Bereich der Empfindlichkeit des menschlichen Auges und teilweise unterhalb der Sperrgrenze des IR-Filters aufweist.

Gemäß den oben genannten unterschiedlichen Ausführungsformen der Erfindung ist es möglich zu gewährleisten, dass eine detaillierte Bildwiedergabe bei dunklen Umgebungsbedingungen (Nacht) und eine farbtreue Wiedergabe der Fahrzeugumgebung bei hellen Umgebungsbedingungen (Tag) möglich ist.

Gemäß der Erfindung ist der verwendete Bildsensor vorzugsweise ein gegenüber IR-Licht empfindlicher Farbbildsensor und die Beleuchtungseinheit beispielsweise ein Laser, oder weist eine oder mehrere lichtemittierende Dioden auf. Andere herkömmliche Lichtquellen können in der Beleuchtungseinheit zum Einsatz kommen.

Gemäß der Erfindung wird definiert, dass der obere Bereich der Empfindlichkeit des menschlichen Auges bei 680 nm beginnt und bei etwa 780 nm endet, wobei der von einem menschlichen Auge sichtbare Bereich zwischen 380 nm und 780 nm liegt.

Durch die erfindungsgemäße Ausgestaltung der Beleuchtungseinheit, wie oben erwähnt, ermöglicht das Kamerasystem bei Dunkelheit eine detaillierte Bilddarstellung in Situationen, in denen das menschliche Auge die Umgebung kaum noch wahrnehmen kann. Ursache dafür ist, dass der Bildsensor im Bereich der Emission der Beleuchtungseinheit noch eine signifikante Lichtempfindlichkeit aufweist und dadurch in der Lage ist ein detailliertes Bild der Umgebung darzustellen.

Da die Beleuchtungseinheit gemäß der Erfindung im oberen Bereich der Empfindlichkeit des menschlichen Auges arbeitet, wird sie vom menschlichen Auge nur sehr schwach wahrgenommen und wirkt daher nicht störend, so dass nur sehr geringe Farbverfälschungen bei Helligkeit auftreten, da weiterhin ein IR-Sperrfilter zum Einsatz kommt.

Im Folgenden werden unter Bezugnahme auf die beigefügten Zeichnungen vorteilhafte Ausführungsformen der Erfindung beschrieben, wobei gleiche Bezugszeichen für gleiche oder ähnliche Teile verwendet werden. Es zeigen:
Fig. 1 eine schematische Ansicht eines Kamerasystems gemäß der Erfindung.
Fig. 2 ein Diagramm zur Charakterisierung des von der Beleuchtungseinheit ausgesendeten Lichts gemäß einem ersten Ausführungsbeispiel.
Fig. 3 ein Diagramm zur Charakterisierung des von der Beleuchtungseinheit ausgesendeten Lichts gemäß einem zweiten Ausführungsbeispiel.
Fig. 4 ein Diagramm zur Charakterisierung des von der Beleuchtungseinheit ausgesendeten Lichts gemäß einem dritten Ausführungsbeispiel; und
Fig. 5 ein Diagramm zur Charakterisierung des von der Beleuchtungseinheit ausgesendeten Lichts gemäß einem vierten Ausführungsbeispiel der Erfindung.

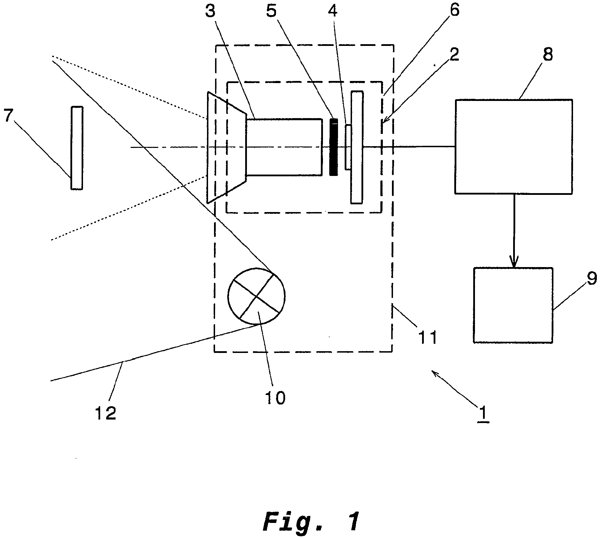

Fig. 1 zeigt ein Kamerasystem 1 gemäß einem bevorzugten Ausführungsbeispiel der Erfindung, das eine Bildaufnahmeeinheit 2 mit einem optischen Element 3 und einem Bildsensor 4 aufweist. Das optische Element 3 ist beispielsweise ein Objektiv oder weist ein anderes optisches Bauteil auf, über das Licht von außen in die Bildaufnahmeeinheit 2 gelangen kann. Gemäß dem bevorzugten Ausführungsbeispiel der Erfindung ist der Bildsensor 4 beispielsweise ein Farbbildsensor, der gegenüber IR-Licht empfindlich ist.

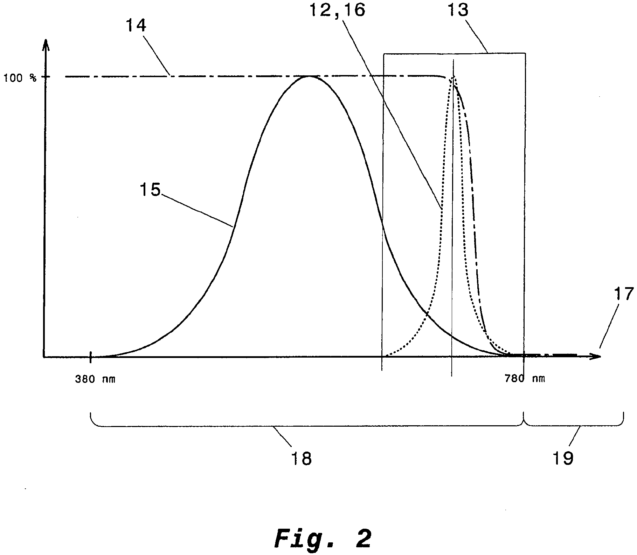

Wie ferner in Fig. 1 gezeigt, befindet sich zwischen dem optischen Element 3 und dem Bildsensor 4 ein IR-Sperrfilter (IR-Cutfilter) 5, der eine vorbestimmte Charakteristik aufweist, die später im Einzelnen unter Bezugnahme auf die Figuren 2 bis 5 beschrieben wird.

Der IR-Sperrfilter 5 ist vorgesehen, um sicherzustellen, dass IR-Licht aus dem durch das optische Element 3 einfallenden Licht zu filtern, und befindet sich vorzugsweise zwischen dem optischen Element 3 und dem Bildsensor 4.

Gemäß dem bevorzugten Ausführungsbeispiel der Erfindung sind das optische Element 3, der Bildsensor 4 und der IR-Sperrfilter 5 in einem Gehäuse 6 untergebracht.

Fig. 1 zeigt ferner ein Objekt 7, das sich außerhalb des Kamerasystems 1, speziell außerhalb eines Fahrzeugs befindet, in dem das Kamerasystem 1 verwendet wird. Das Kamerasystem 1 kann sich beispielsweise in oder außerhalb einer Fahrerkabine befinden, um ein Objekt 7 zu erfassen, das sich in der Umgebung der Fahrerkabine oder einem Laderaum des Fahrzeugs befindet. Durch die Bildaufnahmeeinheit 2 werden Bilddaten von dem Objekt 7 erfasst und an eine Verarbeitungseinheit 8 geliefert. Die Verarbeitungseinheit 8 führt herkömmliche Bildverarbeitungsprozesse durch, um die Bilddaten derart zu verarbeiten, dass sie einem Benutzer (Fahrer) auf einer Anzeigenvorrichtung 9 angezeigt werden können. Die Anzeigenvorrichtung 9 kann beispielsweise ein herkömmlicher Monitor sein, der sich im Fahrzeuginneren befindet und von dem Fahrer des Fahrzeugs einsehbar ist.

Wie in Fig. 1 gezeigt, weist das Kamerasystem 1 gemäß dem bevorzugten Ausführungsbeispiel der Erfindung ferner eine Beleuchtungseinheit 10 auf, die zusammen mit der Bildaufnahmeeinheit 2 in einem Gehäuse 11 untergebracht ist. Das Gehäuse 11 ist dabei derart ausgestaltet, dass Licht von der Beleuchtungseinheit 10 ungehindert zu dem Objekt 7 gelangen kann, um dieses auszuleuchten. Obwohl nicht in der Fig. 1 gezeigt, kann ein oder können mehrere Umlenkspiegel, Sammellinsen, etc. in dem Kamerasystem 1 vorgesehen werden, um sicherzustellen, dass das Objekt 7 gut von der Beleuchtungseinheit 10 ausgeleuchtet wird.

Die Beleuchtungseinheit 10 kann ferner separat und unabhängig von der Bildaufnahmeeinheit 2 ausgebildet sein.

Ferner, ist es gemäß einer anderen Ausgestaltung der Erfindung möglich, dass das optische Element 3, der Bildsensor 4, der IR-Sperrfilter 5 und die Beleuchtungseinheit 10 in einem gemeinsamen Gehäuse untergebracht sind.

Gemäß dem bevorzugten Ausführungsbeispiel der Erfindung ist die Beleuchtungseinheit 10 beispielsweise eine LED oder besteht aus einer Mehrzahl von LEDs. Alternativ kann die Beleuchtungseinheit auch einen Laser aufweisen.

Die Beleuchtungseinheit 10, wie in Fig. 1 gezeigt, dient dazu sicherzustellen, dass ein durch die Bildaufnahmeeinheit 2 bei Dunkelheit aufgenommenes Bild des Objekts 7 eine detaillierte Bildwiedergabe liefert, und ein bei Helligkeit aufgenommenes Bild in der Farbtreue minimal beeinflusst ist. Die Beleuchtungseinheit 10 beleuchtet gemäß dem bevorzugten Ausführungsbeispiel der Erfindung das Objekt 7 speziell mit Licht 12, das eine Wellenlänge zumindest teilweise im oberen Bereich der Empfindlichkeit des menschlichen Auges und zumindest teilweise unterhalb der Sperrgrenze des IR-Sperrfilters 5 aufweist, wie nachfolgend unter Bezugnahme auf die Figuren 2 bis 5 beschrieben.

Fig. 2 zeigt ein Diagramm zur Charakterisierung des von der Beleuchtungseinheit 10 ausgesendeten Lichts gemäß einem ersten Ausführungsbeispiel der Erfindung.

Fig. 2 zeigt einen Wellenlängenbereich, in dem das menschliche Auge typischerweise empfindlich ist. Gemäß Fig. 2 reicht dieser Bereich vorzugsweise von 380 nm bis 780 nm. Dieser Bereich zwischen 380 nm und 780 nm wird üblicherweise auch als sichtbarer Bereich bezeichnet. Der Bereich oberhalb von 780 nm wird üblicherweise als IR-Bereich bezeichnet.

Ferner zeigt Fig. 2 einen oberen Randbereich 13 der Empfindlichkeit des menschlichen Auges. Gemäß dem bevorzugten Ausführungsbeispiel beginnt dieser obere Randbereich 13 bei ca. 680 nm und endet bei ca. 780 nm.

Fig. 2 zeigt ferner in strichpunktierter Linie die Charakteristik des IR-Sperrfilters (IR-Cutfilter) 5 gemäß Fig. 1. Der IR-Sperrfilter gemäß diesem Ausführungsbeispiel ist im Bereich von 380 nm bis ca. 730 nm nahezu 100% IR-durchlässig und im übrigen Wellenlängenbereich, wie in Fig. 2 gezeigt, im Wesentliche IR-Licht undurchlässig.

Fig. 2 zeigt ferner das von der Beleuchtungseinheit 10 ausgesendete Licht 12, das gemäß diesem Ausführungsbeispiel vollständig im oberen Bereich 13 der Empfindlichkeit des menschlichen Auges und vollständig unterhalb der Sperrgrenze des IR-Sperrfilters 5 ist. Die Sperrgrenze des IR-Sperrfilters 5 liegt bei diesem Ausführungsbeispiel im oberen Bereich 13 der Empfindlichkeit des menschlichen Auges.

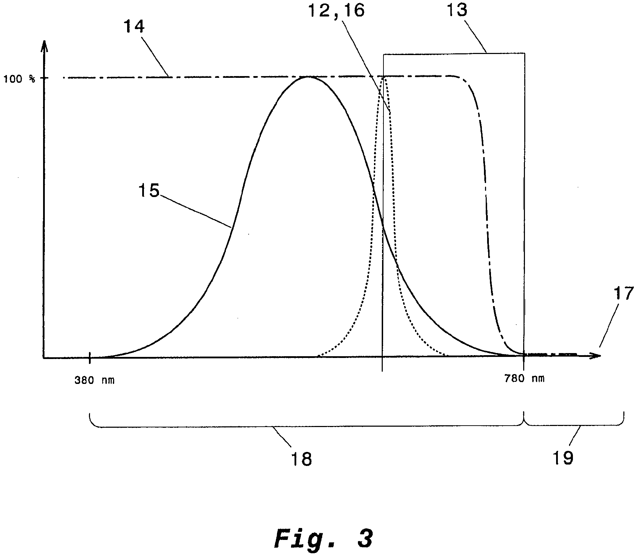

Fig. 3 zeigt ein Diagramm zur Charakterisierung des von der Beleuchtungseinheit 10 ausgesendeten Lichts gemäß einem zweiten Ausführungsbeispiel der Erfindung.

Im Gegensatz zu dem in Fig. 2 gezeigten ersten Ausführungsbeispiel befindet sich das von der Beleuchtungseinheit 10 ausgesendete Licht 12 teilweise im oberen Bereich 13 der Empfindlichkeit des menschlichen Auges und vollständig unterhalb der Sperrgrenze des IR-Sperrfilters 5. Speziell beleuchtet die Beleuchtungseinheit 10 das in Fig. 1 gezeigte Objekt 7 gemäß diesem Ausführungsbeispiel mindestens zu 50% mit Licht 12 im oberen Bereich 13 der Empfindlichkeit des menschlichen Auges.

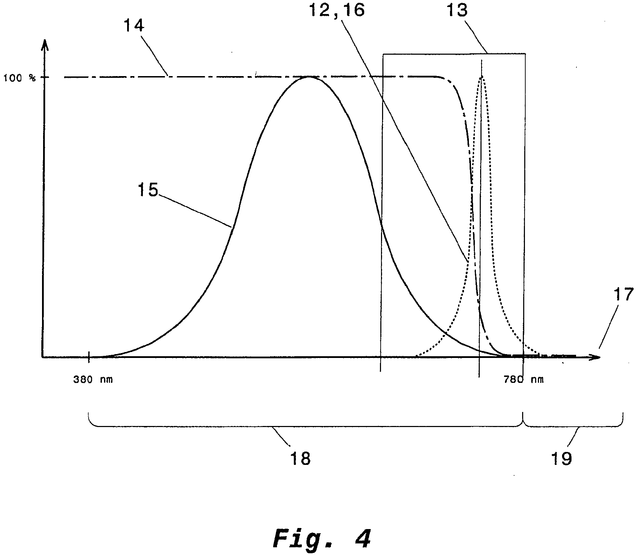

Fig. 4 zeigt ein Diagramm zur Charakterisierung des von der Beleuchtungseinheit 10 ausgesendeten Lichts 12 gemäß einem dritten Ausführungsbeispiel der Erfindung.

Gemäß diesem Ausführungsbeispiel wird das in Fig. 1 gezeigte Objekt 7 mit Licht 12 beleuchtet, das eine Wellenlänge vollständig im oberen Bereich 13 der Empfindlichkeit des menschlichen Auges und teilweise unterhalb der Sperrgrenze des IR-Sperrfilters 5 aufweist.

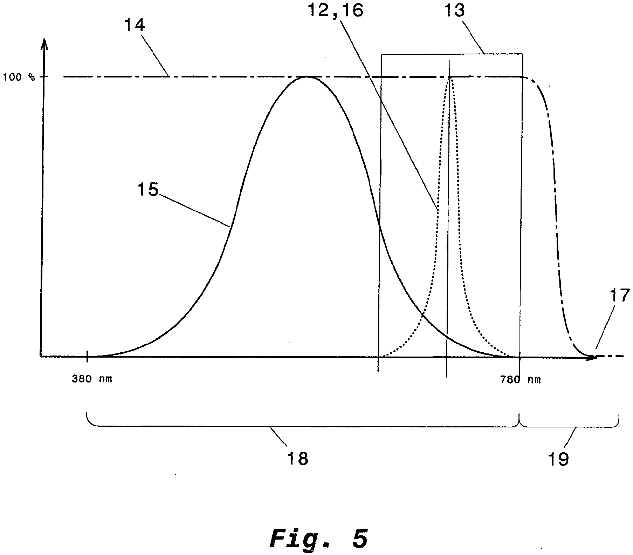

Fig. 5 zeigt ein Diagramm zur Charakterisierung des von der Beleuchtungseinheit 10 ausgesendeten Lichts 12 gemäß einem vierten Ausführungsbeispiel.

Ähnlich wie bei dem in Figur 2 gezeigten Ausführungsbeispiel wird das in Fig. 1 gezeigte Objekt 7 mit Licht beleuchtet, das eine Wellenlänge vollständig im oberen Bereich 13 der Empfindlichkeit des menschlichen Auges und vollständig unterhalb der Sperrgrenze des IR-Sperrfilters 5 aufweist. Gemäß diesem Ausführungsbeispiel lässt der IR-Filter 5 IR-Licht vollständig im sichtbaren Bereich (380 nm bis 780 nm) durch, so dass seine Sperrgrenze im IR-Bereich liegt, also im Gegensatz zu den Ausführungsbeispielen in den Figuren 2 bis 4 außerhalb des oberen Bereichs 13 der Empfindlichkeit des menschlichen Auges.

Obwohl verschiedene Ausführungsbeispiele in den Figuren 2 bis 5 beschrieben wurden zur Charakterisierung des von der Beleuchtungseinheit 10 ausgesendeten Lichts zur Beleuchtung des in Fig. 1 gezeigten Objekts 7 ist allen Ausführungsbeispielen gemeinsame, dass bei Dunkelheit das Kamerasystem 1 ein Bild darstellen kann in Situationen, in denen das menschliche Auge die Umgebung kaum noch wahrnehmen kann, da der Bildsensor 4 im Bereich der Emission der Beleuchtungseinheit 10 noch eine signifikante Lichtempfindlichkeit aufweist und dadurch in der Lage ist, ein Bild der Umgebung darzustellen. Da die Beleuchtungseinheit 10 im oberen Bereich 13 der Empfindlichkeit des menschlichen Auges arbeitet, wird das von dieser ausgesendete Licht vom menschlichen Auge nur sehr schwach wahrgenommen und wirkt daher nicht störend. Da weiterhin ein IR-Sperrfilter zum Einsatz kommt, ist darüber hinaus nur eine sehr geringe Farbverfälschung bei Helligkeit zu beobachten.

Obwohl die Erfindung im Vorangegangenen unter Bezugnahme auf bevorzugte Ausführungsbeispiele beschrieben wurde, ist es selbstverständlich, dass Modifikationen und Abwandlungen möglich sind ohne den Bereich der Erfindung zu verlassen.

So sind beispielsweise mehrere Bildaufnahmeeinheiten in dem Kamerasystem gemäß der Erfindung möglich. Ferner sind mehrere Beleuchtungseinheiten möglich, die ein Objekt außerhalb des Fahrzeugs mit Licht gemäß der Erfindung beleuchten. Obwohl im vorangegangenen nur ein einzelner IR-Sperrfilter beschrieben wurde, können mehrere IR-Sperrfilter mit gleichen oder unterschiedlichen Sperrgrenzen eingesetzt werden.

### Bezugszeichenliste

- 1: Kamerasystem
- 2: Bildaufnahmeeinheit
- 3: optisches Element
- 4: Bildsensor
- 5: IR-Sperrfilter
- 6: Gehäuse
- 7: Objekt
- 8: Verarbeitungseinheit
- 9: Anzeigeneinheit
- 10: Beleuchtungseinheit
- 11: Gehäuse
- 12: Licht
- 13: oberer Randbereich
- 14: Transmission IR-Cutfilter
- 15: Empfindlichkeit menschliches Auge
- 16: Emission der Beleuchtungseinheit
- 17: Wellenlänge Licht
- 18: Sichtbarer Bereich
- 19: IR-Bereich

## Patentansprüche

1. Kamerasystem für ein Fahrzeug, mit
einer Bildaufnahmeeinheit (2), die einen Bildsensor (4), ein optisches Element (3) und wenigstens einen IR-Sperrfilter (5) aufweist, zur Erfassung von Bilddaten eines Objekts (7);
einer Verarbeitungseinheit (8), die die von der Bildaufnahmeeinheit (2) erfassten Bilddaten verarbeitet, zur Anzeige des Objekts (7) auf einer Anzeigeneinheit (9); und
wenigstens einer Beleuchtungseinheit (10), die das Objekt (7) mit Licht (12) beleuchtet, das eine Wellenlänge zumindest teilweise im oberen Bereich (13) der Empfindlichkeit des menschlichen Auges und zumindest teilweise unterhalb einer Sperrgrenze des IR-Sperrfilters (5) aufweist.

2. Kamerasystem nach Anspruch 1, bei dem
die Beleuchtungseinheit (10) das Objekt (7) mit Licht (12) beleuchtet, das eine Wellenlänge im oberen Bereich (13) der Empfindlichkeit des menschlichen Auges und unterhalb der Sperrgrenze des IR-Sperrfilters (5) aufweist.

3. Kamerasystem nach Anspruch 1, bei dem
die Beleuchtungseinheit (10) das Objekt (7) mindestens zu 50% mit Licht (12) im oberen Bereich (13) der Empfindlichkeit des menschlichen Auges beleuchtet.

4. Kamerasystem nach Anspruch 1, bei dem
die Beleuchtungseinheit (10) das Objekt (7) mit Licht (12) beleuchtet, das eine Wellenlänge im oberen Bereich (13) der Empfindlichkeit des menschlichen Auges und teilweise unterhalb der Sperrgrenze des IR-Sperrfilters (5) aufweist.

5. Kamerasystem nach einem der Ansprüche 1 bis 4, bei dem
die Sperrgrenze des IR-Sperrfilters (5) in dem oberen Bereich (13) der Empfindlichkeit des menschlichen Auges liegt.

6. Kamerasystem nach einem der Ansprüche 1 bis 4, bei dem
die Sperrgrenze des IR-Sperrfilters (5) außerhalb des oberen Bereichs (13) der Empfindlichkeit des menschlichen Auges im IR-Bereich liegt.

7. Kamerasystem nach einem der Ansprüche 1 bis 6, bei dem
der Bildsensor (4) ein gegenüber IR-Licht empfindlicher Farbbildsensor ist.

8. Kamerasystem nach einem der Ansprüche 1 bis 7, bei dem
die Beleuchtungseinheit (10) einen Laser aufweist.

9. Kamerasystem nach einem der Ansprüche 1 bis 8, bei dem
die Beleuchtungseinheit (10) eine oder mehrere lichtemittierende Dioden (LEDs) aufweist.

10. Kamerasystem nach einem der Ansprüche 1 bis 9, bei dem
der obere Randbereich der Empfindlichkeit des menschlichen Auges bei 680nm beginnt.
